Europäisches Patentamt

**European Patent Office**

Office européen des brevets

(19)

(11) Veröffentlichungsnummer: **0 025 515**
**B1**

(12) **EUROPÄISCHE PATENTSCHRIFT**

(45) Veröffentlichungstag der Patentschrift:
06.07.83

(51) Int. Cl.³: **D 21 H 3/58**

(21) Anmeldenummer: **80104825.7**

(22) Anmeldetag: **14.08.80**

(54) **Verwendung von stickstoffhaltigen Kondensationsprodukten als Retentionsmittel, Flockungsmittel und Entwässerungsbeschleuniger bei der Papierherstellung.**

(30) Priorität: **29.08.79 DE 2934854**

(43) Veröffentlichungstag der Anmeldung:
**25.03.81 Patentblatt 81/12**

(45) Bekanntmachung des Hinweises auf die Patenterteilung:
**06.07.83 Patentblatt 83/27**

(84) Benannte Vertragsstaaten:
**AT BE CH DE FR GB IT LI NL SE**

(56) Entgegenhaltungen·
**CH-A-471 186**
**DE-A-1 802 435**
**DE-A-2 434 816**
**DE-A-2 602 893**

(73) Patentinhaber: **BASF Aktiengesellschaft,
Carl-Bosch-Strasse 38, D-6700 Ludwigshafen (DE)**

(72) Erfinder: **Hertel, Otto, Dr., Koenigsbacher Strasse 68,
D-6700 Ludwigshafen (DE)**
Erfinder: **Scharf, Emil, Dr., Mohnstrasse 51,
D-6700 Ludwigshafen (DE)**
Erfinder: **Melzer, Jaroslav, Kirchenstrasse 116,
D-6700 Ludwigshafen (DE)**
Erfinder: **Fikentscher, Rolf, Dr., Von-Stephan-Strasse 27,
D-6700 Ludwigshafen (DE)**

EP 0 025 515 B1

0 025 515

## Verwendung von stickstoffhaltigen Kondensationsprodukten als Retentionsmittel, Flockungsmittel und Entwässerungsbeschleuniger bei der Papierherstellung

Die Erfindung betrifft ein Verfahren zur Herstellung von stickstoffhaltigen Kondensationsprodukten durch Umsetzung von Polyamidoaminen, die aus 1 Molteil einer Dicarbonsäure mit 4 bis 10 Kohlenstoffatomen und 0,8 bis 1,4 Molteilen eines Polyalkylenpolyamins, das 3 bis 10 basische Stickstoffatome im Molekül aufweist und gegebenenfalls bis zu 10 Gew.-% eines Diamins enthält, hergestellt worden sind und die gegebenenfalls bis zu 8 Äthylenimineinheiten pro basischer Stickstoffgruppierung aufgepropft enthalten, mit difunktionellen Vernetzern bei Temperaturen oberhalb 20° C bis zur Bildung hochmolekularer gerade noch wasserlöslicher Harze, die − gemessen bei 20° C in 20%iger wäßriger Lösung − eine Viskosität von mehr als 300 mPas aufweisen.

Ein Verfahren dieser Art, bei dem als Vernetzer Polyalkylenoxide mit 8 bis 100 Alkylenoxideinheiten, die an den endständigen OH-Gruppen mit mindestens äquivalenten Mengen Epichlorhydrin umgesetzt worden sind, verwendet werden, ist aus der DE-OS 24 34 816 bekannt. Es hat sich jedoch als nachteilig herausgestellt, daß der bekannte Vernetzer nur sehr schwer in reiner Form zugänglich ist und immer Nebenprodukte aufweist, die bei der Verätherungsreaktion der endständigen Hydroxylgruppen des Polyätherdiols mit Epichlorhydrin erhalten werden.

Aufgabe der Erfindung ist es, für die Verwendung als Retentionsmittel, Flockungsmittel und Entwässerungsbeschleuniger bei der Papierherstellung stickstoffhaltige Kondensationsprodukte zur Verfügung zu stellen, die gegenüber den bekannten Kondensationsprodukten eine bessere Wirksamkeit besitzen.

Die Aufgabe wird erfindungsgemäß gelöst durch Verwendung von stickstoffhaltigen Kondensationsprodukten, die durch Umsetzung von

(a) ein Gewichtsteil von Polyamidoaminen, die 1 Molteil einer Dicarbonsäure mit 4 bis 10 Kohlenstoffatomen und 0,8 bis 1,4 Molteilen eines Polyalkylenpolyamins, das 3 bis 10 basische Stickstoffatome im Molekül aufweist und gegebenenfalls bis zu 10 Gew.-% eines Diamins enthält, hergestellt worden sind und die gegebenenfalls bis zu 8 Äthylenimineinheiten pro basischer Stickstoffgruppierung aufgepfropft enthalten mit

(b) 0,1 bis 4 Gewichtsteilen von $\alpha,\omega$-Dichlorpolyalkylenoxiden, die durch Reaktion von Polyalkylenoxiden mit 8 bis 100 Alkylenoxideinheiten mit

Thionylchlorid und anschließende Zersetzung der bischlorsulfonierten Verbindungen unter Schwefeldioxidabspaltung oder

Phosgen und anschließender Zersetzung der Bis-chlor-Kohlensäureester unter Kohlendioxidabspaltung hergestellt worden sind,

bei Temperaturen oberhalb 20° C bis zur Bildung hochmolekularer, gerade noch wasserlöslicher Harze, die − gemessen bei 20° C in 20%iger wäßriger Lösung − eine Viskosität von mehr als 300 mPas aufweisen, erhalten werden, als Retentionsmittel, Flockungsmittel und Entwässerungsbeschleuniger bei der Papierherstellung.

Die so hergestellten stickstoffhaltigen Kondensationsprodukte weisen keine bei der Anwendung störenden Verunreinigungen auf und haben gegenüber den aus der DE-OS 24 34 816 bekannten eine verbesserte Wirksamkeit bei der Anwendung.

Polyamidoamine, die bei dem erfindungsgemäßen Verfahren eingesetzt werden, erhält man, wenn man Dicarbonsäuren mit 4 bis 10 Kohlenstoffatomen mit Polyalkylenpolyaminen umsetzt, die 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Für die Herstellung der Polyamide ist es auch möglich, Mischungen von Dicarbonsäuren zu verwenden, z. B. Mischungen aus Adipinsäure und Glutarsäure oder Maleinsäure und Adipinsäure. Vorzugsweise verwendet man Adipinsäure. Die Carbonsäuren werden mit Polyalkylenpolyaminen kondensiert, die 3 bis 10 basische Stickstoffatome im Molekül enthalten, z. B. Diäthylentriamin, Triäthylentetramin, Tetraäthylenpentamin, Dipropylentriamin, Tripropylentetramin, Dihexamethylentriamin, Aminopropyläthylendiamin und Bis-aminopropyläthylendiamin. Die Polyalkylenpolyamine können entweder in reiner Form oder auch als Mischung bzw. in Mischung bis zu gegebenenfalls 10 Gew.-% eines Diamins, wie Äthylendiamin oder Hexamethylendiamin, eingesetzt werden. Die Umsetzung der Dicarbonsäuren mit den Polyalkylenpolyaminen wird vorzugsweise in Substanz durchgeführt, kann jedoch auch in einem gegenüber diesen Substanzen inerten Lösungsmittel vorgenommen werden. Die Reaktionspartner werden dazu auf höhere Temperatur, z. B. in dem Bereich von 120 bis 180° C erhitzt. Das Wasser, das bei der Reaktion entsteht, wird aus dem System entfernt. Die Kondensation kann jedoch auch in Gegenwart von Lactonen oder Lactamen von Carbonsäuren mit 4 bis 8 Kohlenstoffatomen vorgenommen werden. Diese Produkte werden dann in das Polyamidoamin eingebaut. Pro Mol der Dicarbonsäure verwendet man 0,8 bis 1,4 Mol eines Polyalkylenpolyamins.

Die Polyamidoamine können direkt mit den difunktionellen Vernetzern zu stickstoffhaltigen Kondensationsprodukten umgesetzt werden. Besonders wirksame Retentionsmittel und Entwässe-

2

rungshilfsmittel enthält man jedoch dann, wenn man die Polyamidoamine vor der Umsetzung mit den difunktionellen Vernetzern mit 2 bis 8 Äthylenimineinheiten pro basischer Stickstoffgruppierung modifiziert (d. h., 100 Gewichtsteile eines Polyamidoamins werden mit 20 bis 400 Gewichtsteilen Äthylenimin umgesetzt). Produkte dieser Art erhält man, indem man Äthylenimin in Gegenwart von Säuren oder Lewissäuren, z. B. Bortrifluoridätherat oder Schwefelsäure, auf die Polyamidoamine aufpropft. Auch Säurebildner wie Dimethylsulfat und Alkylhalogenide sind geeignet.

Als difunktionelle Vernetzer werden gemäß der Erfindung $\alpha,\omega$-Dihalogenpolyglykoläther von Polyalkylenoxiden mit 8 bis 100 Alkylenoxideinheiten verwendet. Als Polyalkylenoxide kommen hauptsächlich Äthylenoxid- und/oder Propylenoxidhomo- bzw. -copolymerisate in Betracht, wobei der Anteil der Propylenoxidgruppen zweckmäßig höchstens 50% der gesamten Alkylenoxidgruppen betragen sollte. Vorzugsweise wählt man dafür Blockcopolymerisate der Formel

$$A[(OR^1)_m(OR^2)_n(OR^1)_pH]_2$$

in der $R^1$ einen Äthylenrest, $R^2$ einen 1,2-Propylenrest, m bzw. p Werte von 1 bis 50, n Werte von 0 bis 50 und A den Rest eines zweiwertigen Alkohols mit 2 bis 6 Kohlenstoffatomen oder einen Polypropylenglykolrest mit 1 bis 50 Propylenoxideinheiten mit der Maßgabe bedeuten, daß in diesem Fall n gleich 0 ist. Einzelne Vertreter sind z. B. oxyäthylierte bzw. oxäthylierte-oxpropylierte zweiwertige Alkohole, wie Glykol, Propylenglykol, Hexandiol sowie Polypropylenglykol, das bis zu 50 Propylenoxideinheiten im Molekül enthalten kann. Aus diesem Produkt erhält man bei der Oxäthylierung an beiden Seiten Äthylenoxideinheiten, d. h. es entstehen gemischte Blockcopolymerisate des Äthylenoxids und Propylenoxids. Die polyoxäthylierten bzw. gegebenenfalls oxpropylierten Produkte sind als Verbindungen aufzufassen, die zwei endständige freie Hydroxylgruppen tragen. Diese endständigen Hydroxylgruppen werden durch Chlor substituiert, indem man die Polyalkylenoxide

1.  mit Thionylchlorid unter HCl-Abspaltung und nachfolgender katalytischer Zersetzung der chlorsulfonierten Verbindung unter Schwefeldioxidabspaltung oder
2.  mit Phosgen unter HCl-Abspaltung in die entsprechenden Bischlorkohlensäureester überführt und daraus anschließend durch katalytische Zersetzung unter Kohlendioxidabspaltung

jeweils $\alpha,\omega$-Dichlorpolyglykoläther enthält. Die Zersetzung der nach Methode 1 erhaltenen bis-chlorsulfonierten Verbindungen und der nach Methode 2 zunächst gebildeten Bichlorkohlensäureester zu $\alpha,\omega$-Dichlorpolyalkylenoxiden erfolgt nach bekannten Verfahren durch Erhitzen dieser Verbindungen auf etwa 70 bis 150°C in Gegenwart von bis zu 2 Gew.-% eines tertiären Amins. Es kommen nur diese beiden Methoden für die Herstellung der $\alpha,\omega$-Dichlorpolyglykoläther in Betracht, weil hierbei die gewünschten Vernetzer in einer solchen Reinheit erhalten werden, daß sie direkt für die Herstellung der stickstoffhaltigen Kondensationsprodukte verwendet werden können, ohne vorher einer aufwendigen Reinigungsoperation unterworfen werden zu müssen.

Die Polyamidoamine, die gegebenenfalls 2 bis 8 Äthylenimineinheiten pro basischer Stickstoffgruppierung aufgepropft enthalten, werden bei Temperaturen oberhalb von 20°C mit den $\alpha,\omega$-Dichlorpolyglykoläthern vernetzt. Die Vernetzung wird in einem Lösungsmittel durchgeführt. Geeignete Lösungsmittel sind Wasser und organische Flüssigkeiten, die mit Wasser mischbar sind, z. B. ein- und mehrwertige Alkohole, sofern sie vollständig mit Wasser mischbar sind, Dioxan, Tetrahydrofuran sowie verätherte Polyole, z. B. Monoäther von Äthylenglykol, Diäthylenglykol, Triäthylenglykol, die jeweils mit $C_1$- bis $C_4$-Alkoholen veräthert sind, die entsprechenden Diäther, wie Diäthylenglykoldiäthyläther und Diäthylenglykolbutyläther. Es ist selbstverständlich auch möglich, Mischungen mehrerer Lösungsmittel zu verwenden. Die Umsetzung wird vorzugsweise in Wasser durchgeführt.

Die Konzentration des Polyamidoamins und des difunktionellen Vernetzers in dem Lösungsmittel kann in einem weiten Bereich schwanken, z. B. zwischen 80 bis 10 Gew.-% betragen. Verwendet man Wasser als alleiniges Lösungsmittel, so führt man die Kondensationsreaktion in der Regel unter Normaldruck bei Temperaturen bis zu 100°C durch. Falls man unter Ausschluß von Wasser oder in Gegenwart von nur geringen Mengen an Wasser arbeitet und ein Lösungsmittel verwendet, dessen Siedepunkt unterhalb der Kondensationstemperatur liegt, wird die Kondensation in Druckapparaturen durchgeführt.

Zur Herstellung der wasserlöslichen, stickstoffhaltigen Kondensationsprodukte kann man so vorgehen, daß man die Polyamidoamine, die gegebenenfalls Äthylenimineinheiten aufgepropft enthalten, und die difunktionellen Vernetzer mischt und auf höhere Temperaturen erhitzt, um die Vernetzungsreaktion zu bewerkstelligen. Man kann jedoch auch so vorgehen, daß man einen Teil des Polyamidoamins in einem Reaktionsgefäß vorlegt, es auf Kondensationstemperatur erhitzt und nach Maßgabe des Verbrauchs den Vernetzer zufügt. Ebenso ist es möglich, die als difunktionelle Vernetzer verwendeten $\alpha,\omega$-Dichlorpolyglykoläther in dem Reaktionsgefäß vorzulegen, auf Kondensationstemperatur zu erhitzen und das Polyamidoamin nach Maßgabe der Umsetzungsgeschwindigkeit kontinuierlich oder portionsweise zuzusetzen. Je nach Reaktionsbedingungen — Temperatur,

3

Konzentration der Reaktionspartner und dem Lösungsmittel — ist die Kondensationsreaktion nach etwa 30 Minuten bis 15 Stunden beendet. Die Kondensation wird mindestens so weit geführt, bis wasserlösliche, hochmolekulare Harze vorliegen, die, gemessen bei 20°C in 20%iger wäßriger Lösung, eine Viskosität von mindestens 300 mPas aufweisen. Vorzugsweise stellt man Harze her, deren Viskositäten in 20%iger wäßriger Lösung bei 20°C zwischen 400 und 2500 mPas liegen. Der Verlauf der Vernetzungsreaktion kann leicht verfolgt werden, indem man dem Reaktionsgemisch Proben entnimmt und die Viskosität der Harzlösungen bestimmt.

Die Kondensationsreaktion erfolgt bei pH-Werten oberhalb von 8, vorzugsweise in dem Bereich zwischen 9 und 11. Sie kann leicht gestoppt werden, indem man den pH-Wert auf 7 oder darunter erniedrigt. Die in der DE-OS 24 34 816 beschriebenen Vernetzer ($\alpha,\omega$-Dichlorhydrinpolyalkylenglykoläther) müssen bei dem bekannten Verfahren vollständig umgesetzt werden, weil sonst nachträglich noch eine unerwünschte Erhöhung der Viskosität der Kondensationsprodukte eintritt. Demgegenüber ist es bei dem erfindungsgemäßen Verfahren nicht erforderlich, daß der gesamte difunktionelle Vernetzer ($\alpha,\omega$-Dichlorpolyalkylenglykol) mit dem Polyamidoamin umgesetzt wird. Man erhält vielmehr auch dann lagerstabile Produkte, wenn Reste von noch nicht umgesetztem $\alpha,\omega$-Dichlorpolyäthylenglykol im Kondensationsprodukt verbleiben, sofern man den pH-Wert der wäßrigen Lösung des Reaktionsgemisches auf einen Wert von 5 oder darunter einstellt. Das erfindungsgemäße Verfahren hat gegenüber dem aus der DE-OS 24 34 816 bekannten Verfahren den Vorteil, daß die Vernetzungsreaktion, vor allem bei größeren Ansätzen, leichter beherrscht werden kann, und zwar durch eine Senkung der Temperatur sowie durch die Erniedrigung des pH-Werts. Diejenige Vernetzermenge, die nicht mit dem Polyamidoamin reagiert hat, kann im Kondensationsprodukt verbleiben ohne eine unerwünschte Nebenreaktion zu verursachen.

Die so hergestellten stickstoffhaltigen Kondensationsprodukte werden bei der Papierherstellung als Flockungsmittel, Retentionsmittel und Entwässerungshilfsmittel verwendet. Sofern die Kondensation der Polyamidoamine mit den difunktionellen Vernetzern in einem mit Wasser mischbaren Lösungsmittel durchgeführt wurde, ist es nicht erforderlich, das mit Wasser mischbare Lösungsmittel zu entfernen, sondern man kann das Reaktionsgemisch direkt oder nach Verdünnung mit Wasser bei der Papierherstellung einsetzen. Die wasserlöslichen, stickstoffhaltigen Kondensationsprodukte werden dabei dem Papierstoff in einer Menge von 0,01 bis 0,3 Gew.-%, bezogen auf trockenen Faserstoff, zugesetzt.

Die in den Beispielen angegebenen Teile sind Gewichtsteile, die Angaben in Prozent beziehen sich auf das Gewicht der Stoffe, sofern nichts anderes vermerkt ist. Die erfindungsgemäß hergestellten Produkte wurden als Entwässerungshilfsmittel getestet und bezüglich dieser Eigenschaften mit bekannten Entwässerungshilfsmitteln verglichen. Die Entwässerungsbeschleunigung wurde durch die Mahlgradsenkung in °SR charakterisiert. Der Mahlgrad nach Schopper-Riegler wurde nach der Vorschrift des Merkblatts 107 des Vereins der Zellstoff- und Papierchemiker und Ingenieure bestimmt. Sämtliche Viskositätsangaben beziehen sich auf Meßergebnisse, die an 20 gew.-%igen wäßrigen Lösungen bei einer Temperatur von 20°C mit einem Haake-Rotationsviskosimeter ermittelt wurden, wobei in dem Viskositätsbereich unter 1000 mPas ein Schergefälle von 49 sec$^{-1}$ und darüber ein solches von 24,5 sec$^{-1}$ eingestellt wurde.

Die Füllstoffretention wurde durch den Aschegehalt von Papierblättern charakterisiert, die mit Hilfe eines Rapid-Köthengerätes nach Merkblatt 108 des Vereins der Zellstoff- und Papierchemiker und Ingenieure hergestellt wurden. Die Papierweiße wurde mit einem Zeiss-Elrepho-Gerät, Filter R46R mit und ohne UV-Anregung ermittelt. Die Remissionswerte wurden in Prozent angegeben.

Herstellung von $\alpha,\omega$-Dichlorpolyglykoläthern

1. Umsetzung von Polyäthylenglykolen mit Phosgen und Spaltung der Bischlorformiate

a) In 1772 Teile Polyäthylenglykol des mittleren Molekulargewichts 600 werden im Laufe von 4 Stunden bei einer Temperatur von 25 bis 35°C 900 Teile gasförmiges Phosgen unter Ausschluß von Feuchtigkeit mit einer Geschwindigkeit eingeleitet, daß Phosgen am Rückfluß siedet. Danach hält man innerhalb von 1 Stunde die Temperatur des Reaktionsgemisches auf 60°C und leitet 200 Teile Phosgen ein. Danach wird im Verlauf einer weiteren Stunde die Temperatur auf 80°C gesteigert. Um überflüssiges Phosgen zu entfernen, wird dann ein trockener Stickstoffstrom (50 Liter/Stunde) durch das Reaktionsgemisch geleitet. Man erhält 2166 Teile des Polyäthylenglykol-bis-chlorformiat als klare hellgelbe Flüssigkeit.

Das so erhaltene Bischlorformiat wird zur $\alpha,\omega$-Dichlorhalogenverbindung zersetzt, indem man z. B. in 200 Teile des Dichlorformiats 4 Teile Pyridin löst und die Lösung auf eine Temperatur von 120 bis 125°C erhitzt. Bei dieser Temperatur spaltet sich mit hoher Geschwindigkeit Kohlendioxid ab. Im Laufe von 3 Stunden läßt man 2000 Teile des Dichlorformiats zutropfen. Nach Beendigung der CO$_2$-Abspaltung erhält man 1966 g des $\alpha,\omega$-Dichlorpolyglykoläthers (mittleres Molekulargewicht des Polyglykoläthers: 600) als gelbe bis hellbraune Flüssigkeit. Die Ausbeute ist praktisch quantitativ, der difunktionelle Vernetzer liegt in einer solchen Reinheit vor, daß er ohne eine

4

Reinigungsoperation direkt für die Vernetzung von Polyamidoaminen verwendet werden kann. Der so hergestellte $\alpha,\omega$-Dichlorpolyglykoläther hatte einen Chlorwert von 11,3% (Theorie 11,3%).

In der selben Weise wurden $\alpha,\omega$-Dichlorpolyglykoläther hergestellt, die sich von Polyäthylenglykolen eines Molekulargewichts von

b)   200
c)   400
d)   800
e)   1000 und
f)   1500 ableiteten.

Auch bei den Umsetzungen b) bis f) entstanden $\alpha,\omega$-Dichlorpolyglykoläther in praktisch quantitativer Ausbeute, so daß sich die Entfernung von Verunreinigungen erübrigte.

## 2. Herstellung von $\alpha,\omega$-Dichlorpolyglykoläthern durch Umsetzung von Polyäthylenglykolen mit Thionylchlorid

a)   Unter Ausschluß von Feuchtigkeit erhitzt man 300 Teile eines Polyäthylenglykols des mittleren Molekulargewichts 1500 auf eine Temperatur von 56°C und fügt dazu unter guter Durchmischung innerhalb von 45 Minuten 80,9 Teile Thionylchlorid zu. Die endständigen OH-Gruppen des Polyalkylenglykols reagieren unter HCl-Entwicklung mit dem Thionylchlorid. Nach Zugabe des gesamten Thionylchlorids wird das Reaktionsgemisch noch 18 Stunden lang bei einer Temperatur von 40°C gerührt, danach leitet man 4 Stunden Stickstoff durch die Schmelze, um die Salzsäure möglichst weitgehend aus dem Reaktionsprodukt zu entfernen. Um aus dem chlorsulfonierten Polyäthylenglykoläther die entsprechende $\alpha,\omega$-Dichlorverbindung herzustellen, gibt man zu dem Chlorsulfonierungsprodukt 4 Teile Pyridin zu und erhitzt es auf eine Temperatur im Bereich von 120 bis 130°C. Dabei spaltet sich Schwefeldioxid ab. Sobald die Schwefeldioxidentwicklung beendet ist, hält man das Reaktionsgemisch noch 2 Stunden bei einer Temperatur von 120°C und entfernt schließlich im Vakuum der Wasserstrahlpumpe bei einer Temperatur von 120°C das restliche Schwefeldioxid. Nach dem Abkühlen des Ansatzes auf Raumtemperatur erhält man eine schwach gelb gefärbte Paste, die den gewünschten $\alpha,\omega$-Dichlorpolyglykoläther darstellt (Chlorwert des Reaktionsproduktes 4,7%, Theorie 4,62%).

In der selben Weise wurden $\alpha,\omega$-Dichlorverbindungen von Polyäthylenglykolen des mittleren Molekulargewichts

b)   4000
c)   6000
d)   9000

sowie die $\alpha,\omega$-Dichlorverbindungen von

e)   Polytetrahydrofuran eines mittleren Molekulargewichts von 600 und
f)   Polypropylenglykol eines mittleren Molekulargewichts von 800 hergestellt.

Auch die gemäß b) bis f) hergestellten difunktionellen Vernetzer fielen in einer solchen Reinheit an, daß sie direkt für die Herstellung der vernetzten, wasserlöslichen, stickstoffhaltigen Kondensationsprodukte eingesetzt werden konnten.

## Herstellung des Polyamidoaminharzes 1

Eine Mischung aus 530 Teilen Wasser, 667 Teilen eines Gemisches aus 91,5% Diäthylentriamin und 8,5% Triäthylentetramin und 925 Teilen Adipinsäure wird in einer Stickstoffatmosphäre innerhalb von $3^1/_2$ Stunden auf eine Temperatur von 160°C erhitzt. Dann wird innerhalb von 5 Stunden bei 160°C Wasser abdestilliert. Man erhält ein Polyamidoamin, das bei einer Temperatur von 130°C mit 1400 Teilen Wasser versetzt wird, so daß eine 48,3%ige wäßrige Lösung des Polyamidoamins resultiert. Die erhaltene Harzlösung hat eine Dichte von 1,095 g/cm³ und bei 25°C eine Viskosität von 320 mPas. Der Gehalt an basischem Stickstoff beträgt 7,0%, bezogen auf 100%iges Polyamidoamin.

### Herstellung des Polyamidoaminharzes 2

548,6 Teile einer 48,3%igen wäßrigen Lösung des Polyamidoaminharzes 1, (die somit 250 Teile des 100%igen Harzes 1 enthält), wird mit 15,5 Teilen konzentrierter Schwefelsäure versetzt und auf eine Temperatur von 80°C erhitzt. Zu dieser Lösung gibt man in dem Temperaturbereich von 80 bis 85°C innerhalb von 4 Stunden 534 Teile einer 50%igen wäßrigen Äthyleniminlösung. Nach Beendigung der Äthyleniminzugabe wird die Temperatur des Reaktionsgemisches noch 30 Minuten bei 80°C gehalten. Man erhält ein mit 6,2 Äthylenimineinheiten pro basischer Stickstoffgruppierung modifiziertes Polyamidoamin in Form einer 47,1%igen wäßrigen Lösung, die bei einer Temperatur von 20°C eine Dichte von 1,094 g/cm³ und eine Viskosität von 753 mPas hat.

### Herstellung des Polyamidoaminharzes 3

507 Teile eines Amingemisches aus 9 Gew.-% Äthylendiamin, 49 Gew.-% $\gamma$-Aminopropyl-äthylendiamin, 39 Gew.-% Bis-($\gamma$-aminopropyl-äthylendiamin und 3 Gew.-% höherer Polyalkylenpolyamine in 250 Teilen Wasser wird in einer Stickstoffatmosphäre bei 60 bis 80° mit 581 Teilen Adipinsäure versetzt. Unter Abdestillieren des Wassers wird 2 Stunden bei 120° gehalten, dann die Sumpftemperatur innerhalb von 3 Stunden auf 160° bis 170° erhöht und bei dieser Temperatur gehalten, bis die Säurezahl unter 15 [mgKOH/g] gesunken ist. Das viskose Harz wird bei 130°C rasch mit 1000 Teilen Wasser versetzt und auf Raumtemperatur gekühlt.

Die wäßrige hellbraune Harzlösung hat folgende Kennzahlen:

| | |
|---|---|
| Feststoffgehalt: | 50,4 Gew.-% |
| ber. auf 100%iges Produkt | |
| Säurezahl: | 0,279 mVal/g |
| Aminzahl: | 4,82 mVal/g |
| Viskosität einer 45%igen | |
| wäßrigen Harzlösung bei 20°C: | 567 mPas |
| Brechungsindex einer 45%igen | |
| Harzlösung $n_D^{20}$: | 1,4242. |

### Herstellung des Polyamidoaminharzes 4

500 Teile der ca. 50%igen wäßrigen Lösung des Polyamidoaminharzes 3 werden mit 3,75 Teilen 98%iger Schwefelsäure versetzt und auf 70°C erhitzt. In diese Lösung läßt man bei ca. 80°C innerhalb von ca. 3 Stunden 540 Teile einer 50%igen wäßrigen Äthyleniminlösung einlaufen. Nach beendeter Äthyleniminzugabe wird das Reaktionsgemisch 1 bis 2 Stunden bei 80°C gehalten, bis sich kein Äthylenimin mehr in der Reaktionslösung nachweisen läßt. Das Harz zeigt folgende Kennzahlen:

| | |
|---|---|
| Feststoffgehalt: | 47,8 Gew.-% |
| Säurezahl: | 0,11 mVal/g |
| Aminzahl: | 10,27 mVal/g |
| Viskosität: | (45%ig) 614 mPas (bei 20°C) |

### Beispiel 1

212,3 Teile der 47,1%igen wäßrigen Lösung des Polyamidoaminharzes 2 werden auf 25% verdünnt und bei einer Temperatur von 85°C mit 116 Teilen einer 25%igen Lösung (=29 Teile fest) des $\alpha,\omega$-Dichlorpolyäthylenglykoläthers 1f) versetzt. Pro Teil Polyamidoamin wurden 0,29 Teile des Vernetzers eingesetzt, jeweils bezogen auf die reinen Stoffe. Die Vernetzungsreaktion war nach 5,8 Stunden bei einer Temperatur von 85°C beendet. Die Reaktion wurde gestoppt, indem man 28 Teile Ameisensäure zusetzte, wodurch der pH-Wert des Reaktionsgemisches auf 7,5 erniedrigt wurde. Anschließend verdünnte man das Reaktionsgemisch durch Zugabe von Wasser auf einen Wirkstoffgehalt von 20%. Die Viskosität betrug 800 mPas.

### Beispiel 2

100 Teile einer 25%igen wäßrigen Lösung des Polyamidoaminharzes 2 werden mit 31 Teilen einer 25%igen wäßrigen Lösung des $\alpha,\omega$-Dichlorpolyglykoläthers 1f) versetzt und unter guter Durchmischung auf eine Temperatur von 85°C erhitzt. Nach einer Kondensationszeit von 5,2 Stunden bei einer Temperatur von 85 bis 90°C beträgt die Viskosität einer Probe des Reaktionsgemisches in 20%iger wäßriger Lösung bei 20°C 800 mPas. Die Viskosität des Reaktionsgemisches wurde dadurch überprüft, daß man im Abstand von 10 Minuten dem Reaktionsgemisch Proben entnahm, 20%ige wäßrige Lösungen daraus herstellte und bei einer Temperatur von 20°C die Viskosität ermittelte. Durch Zugabe von Ameisensäure wurde der pH-Wert der Lösung auf 8 erniedrigt. Das Reaktionsgemisch wurde auf Raumtemperatur abgekühlt und durch Zugabe von Wasser auf einen Wirkstoffgehalt von 20% verdünnt.

## Vergleichsbeispiel 1

Man verfährt wie im Beispiel 1 angegeben, jedoch mit der Ausnahme, daß man als difunktionellen Vernetzer den $\alpha,\omega$-Dipropylenchlorhydrinpolyäthylenglykoläther verwendet, der durch Umsetzung von 1 Mol Polyäthylenglykol des Molekulargewichts von 1500 mit 2,05 Mol Epichlorhydrin gemäß der DE-OS 2 434 816 erhalten wurde. Die Vernetzungstemperatur lag bei 65°C. Pro Gewichtsteil des 100%igen Polyamidoamins wurden 0,23 Teile des 100%igen Dichlorhydrinpolyäthylenglykoläthers eingesetzt. Der pH-Wert der Reaktionsmischung wurde nach 4,5 Stunden Kondensationsdauer durch Zugabe von Ameisensäure auf 8 eingestellt und die Lösung auf einen Wirkstoffgehalt von 20% verdünnt. Die Viskosität einer 20%igen wäßrigen Lösung betrug bei einer Temperatur von 20°C 420 mPas.

## Beispiel 3

207 Teile der 48,3%igen wäßrigen Lösung des Polyamidoaminharzes 1 werden in Form einer 25%igen wäßrigen Lösung auf 85°C erhitzt und bei dieser Temperatur langsam mit einer 25%igen wäßrigen Lösung des $\alpha,\omega$-Dichlorpolyäthylenglykoläthers 2a) versetzt. Die Kondensation wird so lange fortgeführt, bis die Viskosität einer 20%igen wäßrigen Lösung bei einer Temperatur von 20°C 800 mPas beträgt. Man benötigte hierfür 38,5 Teile des difunktionellen Vernetzers 2a. (38,5 Teile Vernetzer gerechnet 100% Wirksubstanz = 154 Teile einer 25%igen wäßrigen Lösung.)

Pro Teil Polyamidoamin wurden 0,385 Teile der $\alpha,\omega$-Dichlorverbindung eingesetzt, jeweils bezogen auf 100%ige Substanzen. Nachdem die gewünschte Viskosität erreicht ist, wird die Kondensation durch Zugabe von Ameisensäure gestoppt, wobei es ausreicht, einen pH-Wert von 8 einzustellen. Die Reaktionsmischung wird auf einen Wirkstoffgehalt von 20% verdünnt.

## Vergleichsbeispiel 2

Man verfährt wie im Beispiel 3 angegeben, verwendet jedoch als difunktionellen Vernetzer den im Vergleichsbeispiel 1 angegebenen Dichlorhydrinpolyäthylenglykoläther gemäß DE-OS 2 434 816. Die Vernetzungstemperatur beträgt 65°C. Um eine Viskosität von 800 mPas (Viskosität des vernetzten Polyamidoamins in 20%iger wäßriger Lösung bei 20°C) zu erreichen, benötigte man pro 100 Gewichtsteile des reinen Polyamidoamins 42,5 Gewichtsteile des 100%igen Vernetzers. Der pH-Wert der Harzlösung wird durch Zusatz von Ameisensäure auf 8 eingestellt. Danach wird das Reaktionsgemisch auf einen Wirkstoffgehalt von 20% verdünnt.

## Beispiel 4

603,2 Teile des 47,75%igen Polyamidoaminharzes 4 werden mit 596,8 Teilen Wasser verdünnt und auf 90°C erhitzt. Zur Vernetzung werden 330 Teile einer 20%igen wäßrigen Lösung eines Polyätherdichlorids (Vernetzer 1f) zugesetzt, das durch Phosgenieren von Polyäthylenglykol des Molekulargewichts 1500 gewonnen war (Kennzahlen des Vernetzers (100%ig):

| | |
|---|---|
| Chloridgehalt: | 0,023 mVal/g |
| Gesamt Chlor: | 1,38 mVal/g |
| flüchtige Anteile: | 0,3% |

Als nach $2^3/_4$ Stunden die Viskosität des Harzes nicht weiter anstieg, wurden 28 Teile der Vernetzerlösung 1f zugesetzt. Innerhalb weiterer $3^1/_2$ Stunden erhöhte sich die Viskosität des Harzes auf 1719 mPas (gemessen bei 20°C). Das Harz wurde auf Raumtemperatur gekühlt, mit 71,5 Teilen 85%iger Ameisensäure auf pH 9,0 eingestellt und mit Wasser auf einen Wirkstoffgehalt von 20% verdünnt. Das Harz hat dann eine Viskosität (20°C gemessen mit einem Haake-Rotationsviskonmeter) von 1043 mPas.

# 0 025 515

## Beispiel 5

603,2 Teile des 47,75%igen Polyamidoaminharzes 4 werden mit 596,8 Teilen Wasser verdünnt und bei 90°C mit 462 Teilen einer 20%igen wäßrigen Lösung des Polyätherdichlorids 1f versetzt. Das Reaktionsgemisch wird bei 90°C gehalten, bis die Harzlösung eine Viskosität von 1500 mPas (gemessen bei 20°C) erreicht hat, was nach 170 Minuten der Fall ist. Die Reaktion wird durch Neutralisieren mit Ameisensäure auf pH 7 abgestoppt und das Reaktionsgemisch auf Raumtemperatur gekühlt. Zur Stabilisierung wird es mit 85%iger Ameisensäure auf pH 4,0 angesäuert (Gesamtbedarf an 85%iger Ameisensäure: 199 Teile). Das durch Verdünnen mit Wasser auf 20% Wirksubstanz eingestellte Harz hat eine Viskosität (20°C) von 1105 mPas.

## Vergleichsbeispiel 3

337 Teile der 47,8%igen wäßrigen Polyamidoaminharzlösung 4 wurden mit 334 Teilen Wasser auf 24% Wirkstoffgehalt verdünnt, auf 70°C erhitzt und mit 192 Teilen einer 24%igen wäßrigen Vernetzerlösung versetzt. Als Vernetzer wurde das Umsetzungsprodukt aus Polyäthylenglykol eines mittleren Molekulargewichts von 1500 verwendet, das in Gegenwart von Borfluorid mit 2,05 Mol Epichlorhydrin pro 1 Mol Polyglykol hergestellt wurde. Die Kondensation wurde bei 70°C durchgeführt bis keine Viskositätserhöhung des Reaktionsgemisches festzustellen war. Dann wurden 3 weitere Portionen (48,14 und 8 Teile) der 24%igen Vernetzerlösung zur weiteren Vernetzung nachgesetzt, bis schließlich eine Viskosität des Harzes von 1530 mPas (20°C) erreicht war. Das Harz wurde mit 85%iger Ameisensäure auf pH 8,0 eingestellt und auf 20% Wirkstoffgehalt mit Wasser verdünnt. Die 20%ige wäßrige Lösung des Harzes zeigte dann bei 20°C eine Viskosität von 675 mPas.

Anwendung der Harze gemäß den Beispielen 1 bis 5 und der Vergleichsbeispiele 1 bis 3.

Zunächst wurde die Entwässerungsbeschleunigung geprüft. Als Stoff diente Zeitungsdruckpapier, das stippenfrei im Ultraturrax-Gerät aufgeschlagen wurde. Es wurde bei zwei verschiedenen pH-Werten und unterschiedlichen Einsatzmengen gearbeitet. Die Stoffdichte betrug 0,24 g/l. Die dabei erhaltenen Ergebnisse sind in der Tabelle 1 zusammengestellt.

Tabelle 1

| | Entwässerungsbeschleunigung pH 7,3 | | pH 4,8 Zusatz von 1,5% Alaun zum Stoff | | Einfluß auf Papierweiße und Wirkung auf optische Aufheller | |
|---|---|---|---|---|---|---|
| Zusatz 100%iges Harz, bezogen auf trockenen Zellstoff (%) | 0,06 | 0,08 °SR | 0,05 | 0,09 | mit UV 88,7% | ohne UV 84,2% |
| 0-Wert (ohne Harzzusatz) | 76 | | 70 | | | |
| Harz gemäß Vergleichsbeispiel 1 | 52 | 50 | 40 | 36 | 81,5% | 78,5% |
| Beispiel 1 | 50 | 48 | 38 | 35 | 81,8% | 78,8% |
| Beispiel 2 | 50 | 48,5 | 38,5 | 35 | 81,9% | 78,9% |

Es wurde auch die Füllstoffretention bestimmt, indem man dem Papierstoff verschiedene Mengen an Harz zusetzte. Die Ergebnisse sind in Tabelle 2 zusammengefaßt.

Tabelle 2

| | | pH-Wert der Faserstoff-suspension | |
| --- | --- | --- | --- |
| | | 6 | 4,8 |
| | | Füllstoffretention (% Asche im Papier) | |
| Alaunzusatz, bezogen auf Zellstoff plus Füllstoff | | 0,5 | 1,5 |
| 0-Wert | | 2,2 | 2,4 |
| Vergl.-Bsp. 1 | 0,015% Zusatz | 4,9 | 5,0 |
| | 0,03% Zusatz | 7,0 | 6,3 |
| Beispiel 1 | 0,015% Zusatz | 5,3 | 5,1 |
| | 0,03% Zusatz | 6,7 | 5,9 |
| Beispiel 2 | 0,015% Zusatz | 5,5 | 5,0 |
| | 0,03% Zusatz | 6,8 | 6,0 |

Für die Prüfung der Entwässerungsbeschleunigung des Harzes gemäß Beispiel 3 und Vergleichsbeispiel 2 wurde ein Zeitungsdruckpapier stippenfrei im Ultraturrax-Gerät aufgeschlagen. Die Stoffdichte betrug 0,24 g/l. Folgende Werte wurden ermittelt.

Tabelle 3

| | pH 7,3 | | pH 4,8 (Zusatz von 1,5% Alaun zum Stoff) | |
| --- | --- | --- | --- | --- |
| Zusatz 100%iges Harz, bezogen auf trockenen Zellstoff | 0,06 | 0,08 | 0,06 | 0,09 |
| 0-Wert (ohne Harzzusatz) | 76,5 | | 68 | |
| Vergl.-Beisp. 2 | 69 | 58 | 52 | 49 |
| Beispiel 3 | 67 | 56 | 50 | 45 |

Bei der Prüfung der Füllstoffretention wurden folgende Werte ermittelt (vgl. Tabelle 4):

Tabelle 4

| | | bezogen auf Zellstoff und Füllstoff pH-Wert der Faser-suspension | | |
| --- | --- | --- | --- | --- |
| | | 6 | 4,8 | |
| Alaunzusatz, bezogen auf Zellstoff plus Füllstoff | | 0,5 | 1,5% | |
| 0-Wert | | 2,1 | 2,4 | |
| Vergl.-Beisp. 2 | 0,015% Zusatz | 4,1 | 5,5 | % in Asche im Papier |
| | 0,03% Zusatz | 6,3 | 6,5 | |
| Beispiel 3 | 0,015% Zusatz | 4,6 | 5,6 | |
| | 0,03% Zusatz | 6,5 | 6,5 | |

Der Einfluß der Harze auf die Papierweiße stellt sich folgendermaßen dar.

Tabelle 5

|  | Probe nach Vergleichs-Beispiel 2 | Probe nach Beispiel 3 |
|---|---|---|
| mit UV 95,8% | 90,6% | 90,0% |
| ohne UV 88,9% | 88,8% | 88,7% |

Die Entwässerungsbeschleunigung der Harze gemäß Beispiel 4 und 5 sowie gemäß Vergleichsbeispiel 3 wurde geprüft unter Zusatz der Harze zu einer Stoffmaische von stippenfrei aufgeschlagenem Zeitungspapier bei einer Stoffdichte von 0,24 g/ltr. bei neutralem und schwach saurem pH-Wert. Folgende Ergebnisse wurden erhalten:

|  | Entwässerungsbeschleunigung neutral | | | pH 4,8 unter Zusatz von 4,5% Alaun zum Stoff | | |
|---|---|---|---|---|---|---|
| Zusatz 100%iges Harz bezogen auf trock. Zellstoff (%) | 0,06 | 0,08 °SR | 0,12 | 0,03 | 0,06 °SR | 0,09 |
| 0-Wert (o. Harzzusatz) | | 63 | | | 58,5 | |
| Vergleichsbeisp. 3 | 42 | 37 | 33 | 47,5 | 45,5 | 43 |
| Beispiel 4 | 40 | 37 | 33 | 44,5 | 41,5 | 40 |
| Beispiel 5 | 41 | 38 | 34 | 46 | 44 | 42,5 |

Die Füllstoffretention wurde bestimmt durch den Aschegehalt aus Papierblättern, die in Gegenwart der Harze am Rapid-Köthengerät hergestellt waren (Merkblatt 108 des Vereins der Zellstoff und Papierchemiker und Ingenieure). Folgende Werte wurden gemessen:

Stoff 80% gebleichter Sulfitzellstoff (35°SR) 20% China Clay

|  | Stoffdichte: 2 g/ltr. | | | | | |
|---|---|---|---|---|---|---|
|  | pH 6; 0,4% Alaun | | | pH 4,5; 1,4% Alaun | | |
| Zusatz 100%iges Harz bezogen auf trockenen Zellstoff (%) | 0,015 | 0,030 | 0,045 % Asche | 0,015 | 0,030 | 0,045 |
| 0-Wert (kein Harzzusatz) | | 4,0 | | | 2,9 | |
| Vergleichsbeispiel 3 | 8,2 | 8,8 | 9,2 | 6,6 | 7,2 | 7,8 |
| Beispiel 4 | 7,8 | 8,8 | 9,1 | 6,7 | 7,9 | 8,3 |
| Beispiel 5 | 7,8 | 8,9 | 9,2 | 6,6 | 7,1 | 7,8 |

**Patentanspruch**

Verwendung von stickstoffhaltigen Kondensationsprodukten, die durch Umsetzung von

(a) ein Gewichtsteil von Polyamidoaminen, die aus 1 Molteil einer Dicarbonsäure mit 4 bis 10 Kohlenstoffatomen und 0,8 bis 1,4 Molteilen eines Polyalkylenpolyamins, das 3 bis 10 basische Stickstoffatome im Molekül aufweist und gegebenenfalls bis zu 10 Gew.-% eines Diamins enthält,

0 025 515

hergestellt worden sind und die gegebenenfalls bis zu 8 Äthylenimineinheiten pro basischer Stickstoffgruppierung aufgepfropft enthalten mit

(b) 0,1 bis 4 Gewichtsteilen von $\alpha,\omega$-Dichlorpolyalkylenoxiden, die durch Reaktion von Polyalkylenoxiden mit 8 bis 100 Alkylenoxideinheiten mit
Thionylchlorid und anschließende Zersetzung der bis-chlorsulfonierten Verbindungen unter Schwefeldioxidabspaltung oder
Phosgen und anschließender Zersetzung der Bis-chlorkohlensäureester unter Kohlendioxidabspaltung hergestellt worden sind,

bei Temperaturen oberhalb 20°C bis zur Bildung hochmolekularer, gerade noch wasserlöslicher Harze, die − gemessen bei 20°C in 20%iger wäßriger Lösung − eine Viskosität von mehr als 300 mPas aufweisen, erhalten werden, als Retentionsmittel, Flockungsmittel und Entwässerungsbeschleuniger bei der Papierherstellung.

## Claim

Use of nitrogen-containing condensates obtained by reacting

(a) 1 part by weight of a polyamidoamine which has been prepared from 1 mole of a dicarboxylic acid of 4 to 10 carbon atoms and 0.8−1.4 moles of a polyalkylenepolyamine which has 3−10 basic nitrogen atoms in the molecule and may contain up to 10% by weight of a diamine, and onto which up to 8 ethyleneimine units per basic nitrogen may or may not have been grafted, with

(b) 0.1 to 4 parts by weight of an $\alpha,\omega$-dichloro polyalkylene oxide obtained by reacting a polyalkylene oxide having from 8 to 100 alkylene oxide units with
thionyl chloride and subsequently decomposing the bis-chlorosulphonated compound with the elimination of sulphur dioxide, or
phosgene and subsequently decomposing the bis-chlorocarbonate with the elimination of carbon dioxide,

at a temperature above 20°C until a high molecular weight resin has formed which is only just water-soluble and which has a viscosity, measured in 20% strength aqueous solution at 20°C, of more than 300 mPas, as retention agents, flocculating agents and drainage accelerators in the manufacture of paper.

## Revendication

Utilisation de produits de condensation azotés, préparés par le réaction de

(a) 1 partie en poids de polyamido-amines, obtenues à partir de 1 partie molaire d'un acide dicarboxylique en $C_4$ à $C_{10}$ et de 0,8 à 1,4 partie molaire d'une polyalcoylène-polyamine, dont la molécule comprend 3 à 10 atomes d'azote basiques et qui peut éventuellement contenir jusqu'à 10% en poids d'une diamine, et sur lesquelles peuvent, le cas échéant, être greffées jusqu'à 8 unités éthylène-imine par groupement à azote basique, avec

(b) 0,1 à 4 parties en poids de poly(oxydes d'alcoylène) $\alpha,\omega$-dichlorés, obtenus par réaction de poly(oxydes d'alcoylène) comprenant 8 à 100 unités oxyde d'alcoylène,
soit avec le chlorure de thionyle, suivie de la décomposition des composés bis-chloro-sulfonés avec libération d'anhydride sulfureux,
soit avec le phosgène, suivie de la décomposition des bis-chloro-carboxylates avec libération d'anhydride carbonique,

à des températures supérieures à 20°C, jusqu'à la formation de résines d'un poids moléculaire élevé, à la limite de la solubilité dans l'eau, possédant une viscosité, mesurée à 20°C en solution aqueuse à 20%, supérieure à 300 mPas, comme agents de rétention, agents de floculation et agents accélérant l'égouttage dans la fabrication de papier.

11